Europäisches Patentamt

European Patent Office

Office européen des brevets

(19)

(11) Publication number: **0 080 878**
A2

(12) **EUROPEAN PATENT APPLICATION**

(21) Application number: 82306315.1

(22) Date of filing: 26.11.82

(51) Int. Cl.³: **G 11 C 9/06**

(30) Priority: 27.11.81 US 325288

(43) Date of publication of application:
08.06.83 Bulletin 83/23

(84) Designated Contracting States:
DE FR GB IT

(71) Applicant: STORAGE TECHNOLOGY CORPORATION
2270 South 88th Street P.O. Box 98
Louisville Colorado 80027(US)

(72) Inventor: Moreno, Robert J.
5169 Holmes Place
Boulder Colorado 80303(US)

(72) Inventor: Trede, Brian E.
1215 Delphi Drive
Lafayette Colorado 80026(US)

(72) Inventor: Schmidt, Robert W.
1245 Doric Drive
Lafayette Colorado(US)

(74) Representative: Pears, David Ashley
REDDIE & GROSE 16 Theobalds Road
London WC1X 8PL(GB)

(54) **Cache memory and method of control for use with magnetic disks.**

(57) Data from disk units (26) is cached track by track in a cache memory (30) via a control unit (32) and a director (12 or 14). In order to write complete tracks without waiting for the beginning of track index mark, the track position at the start of writing (ascertained by counting bytes from the index mark) is latched in a first register. A second register is zeroized at the beginning of the track and incremented as bytes are written until the contents of the second register match those of the first. A cache header is assembled from the record headers (R4,R5,R6,R1,R2,R3) found on the track, in the order to writing to the cache memory. A unique byte (Null-74) is interpolated to mark the track beginning and the cache header terminates with another unique byte (Wrap-72).

Fig. 5

Fig. 1

0080878

## CACHE MEMORY AND METHOD OF
## CONTROL FOR USE WITH MAGNETIC DISKS

### Field of the Invention

This invention relates to a cache memory system used in data processing systems to improve the overall throughput or utility of the data processing system. In particular, the invention relates to a system for use with magnetic disk data storage media, comprising a solid-state memory array and controller means adapted to maintain information whereby correspondence between data locations on the disk storage media and storage addresses of data records stored in the solid state array can be maintained.

The invention is related to inventions disclosed in three copending European applications all filed on the same day as the present application :-

| Application No. | Publication No. | Reddie & Grose File |
|---|---|---|
| (1) | | 25354 |
| (2) | | 25355 |
| (3) | | 25356 |

Improvements in data processing systems have generally been directed at improvement either of the average time required to execute a given instruction or reduction in cost of the equipment required to perform such an instruction. One design tradeoff which has typically been made is that of cost versus speed for units of memory for the storage data. For example, tape memory is traditionally slower and less expensive than disk memory. Disk memory in turn is available in several types; the selection of any one type involves a cost/speed tradeoff. Disk memory is slower but less expensive than solid-state memory which itself is available in several types, the selection of which again involves a cost/speed tradeoff. Thus, it continues to be a need of the art to provide cheaper, faster memories or, failing that, to improve the efficiency of presently existing memory types.

The present invention relates to an improvement of the second type. In particular, the invention involves a system and method of operation for reducing the average time necessary for a host central processing unit (CPU), which typically comprises an arithmetic and logic unit and a main memory unit for retention of the instructions and data currently being operated on, to obtain data stored on a less expensive long-term data storage device, i.e. a magnetic disk drive unit.

Delays in memory access occur due to mechanical limitations on the apparatus. For example, in the case of a disk drive, in general, plural disks rotate at a fixed speed past read/write heads which may either be stationary with respect to the disk or move radially back and forth with respect to the disk in order to juxtapose the heads to various portions of the disk surfaces. In either case, there is a finite average time required for a particular data record to be located and read from the disk into a faster form of memory, typically a solid state main memory included by the host computer. The delay may involve the "seek" time required for the head to be moved radially to the particular "tract" selected, as well as "latency" time required for the disk to rotate with respect to the head until the beginning of the particular record sought is juxtaposed to the head for reading or writing.

Application (1) identified above is concerned with a system in which the average time required for a record sought to be transferred to the main memory system of a host computer is significantly reduced.

Application (2) concerns the means which determine when data is to be transferred to the cache memory and application (3) concerns the means whereby the cache memory system can efficiently serve disk drives with different amounts of data per track.

Disk memories of the type in most common use at the present time generally comprise a plurality of disks each having upper and lower surfaces for the storage of data by magnetization of areas on their surfaces. The disks are divided into concentric tracks which are divided into sectors. An index mark is provided on each disk identifying a first sector. When the host computer requires data from a disk drive it issues a "SET SECTOR" command whereby the disk drive is notified that the data beginning at the sector identified by the host is to be read. In accordance with applications (1) and (2) the data called for in each read operation initiated by the host is examined to consider whether it is likely to be a part of a sequence of such records to be called for. If the following record is determined to be likely to be called for, the entire track from which the access request was satisfied is then cached. If the remainder of the track is then called for by the host, it is available in cache memory and the host's request can be very quickly satisfied. Moreover, if the entire track is thereafter called for, the succeeding track is then "prestaged" to the cache in anticipation of further requests.

While as noted above, it is deemed desirable to bring data into the cache from a disk memory system track by track it is not necessarily the case that each request will begin at the index mark which may be taken to be the start of each track. Instead, if the host has called for the first record in the track, the subsequent record will inevitably start other than at the beginning of the track. Clearly, it would be desirable to read succeeding records into the cache without waiting for the disk drive to complete the particular rotation during which the first data record was read, i.e., to switch the path of data being read directly from the host to the cache when it is desired to stage the following tracks to the cache. In order to do so, it is clearly essential that accurate correlation of the relative location of the track on disk and its storage location in the cache be maintained so that, for example, correspondence between succeeding host requests and data storage addresses in cache is maintained.

It is an object of the present invention to enable such accurate correlation of disk memory with cache memory.

Succeeding records when stored on disk drives comprise headers which includes information identifying the particular record, specifying its length and other parameters. As is understood in the art, the requirements of headers for data stored in solid-state memories is substantially different from that stored on magnetic disk media, such as disk drives, and it would be accordingly desirable to provide means for transforming a plurality of magnetic media headers into a single solid-state memory header.

It is a further object of the invention to perform this header transformation and, in particular, to provide a header of a length variable in accordance with the number of records on the track and not of fixed length as is usual in the prior art.

As noted above, it is desirable that an entire disk track be read from disk memory into cache memory at a time, but not necessarily starting from the beginning or index mark of the track. Accordingly, it is an object of the present invention to provide a means whereby it can be reliably determined that an entire track of data has been read from a disk drive into the cache memory array.

The invention is defined in the appended claims.

In the preferred practice of the invention, reliable correlation of the cache memory with respect to the disk drive is maintained by setting a register termed "emulated track position" (ETP) equal to the approximate starting address on disk of the data being read. This address corresponds to the beginning address of the data in the cache. The ETP is thus a measure of the number of bytes from the index mark on disk at which the current starting point is located. This value is saved as a target ETP. One then reads the next record's header information and saves this information in a second register. The records on the track between the current ETP point and the index point can then be read. When the disk's mark is reached, a current ETP value in a third register is set to zero. One can then read the records after the index mark into the cache. As each record is read, the current ETP value in the third register is updated to count the number of bytes that have passed. After each incrementation the current ETP is compared to the target ETP. When it is greater than or equal thereto, the header information from the last record read is compared against that stored in the storage director. If they are not equal, record reading continues. If they are, an indication may be provided that the entire track has been read. Similarly, the value stored in the current ETP register can be used to reliably retransfer correlation of data being read from the cache back to the disk drive in the event of an error occuring in the middle of a read operation.

The invention will be described in more detail, by way of example, with reference to the accompanying drawings, in which:

Fig. 1 is a block diagram of a system embodying the invention;

Fig. 2 shows the data and control paths in a simplified view of the system of Fig. 1;

Fig. 3 shows an expanded view of connection between the directors, the file interface unit, and the cache buffer and manager units;

Fig. 4 shows a functionally partitioned view of the system, showing which functions of the buffered cache memory are performed by the different portions thereof; and

Fig. 5 shows a sample header format.

The cache memory system is designed to operate in conjunction

with a prior art host computer in such a manner that no modification of the host's hardware or software is required. In particular, the cache buffer memory subsystem of the invention should attach to the host computer through a conventional memory channel without modification; that is, it should be plug-compatible with, and software-transparent to, the host. In a preferred embodiment, the cache memory subsystem of the invention is designed to operate in accordance with an IBM Corporation computer (or other computer plug-compatible with the IBM unit) of the class in which the channel is defined by IBM Publication GA22-6974-4 entitled "I/O Interface Channel to Control Unit". This volume describes the channel specifications for plug-compatible memory systems. In a particularly preferred embodiment, the cache buffered memory subsystem of the invention is comprised in a disk drive memory system of the type previously sold by Storage Technology Corporation configured to include a solid-state random access memory (RAM) which can physically be included within the enclosure containing the disk drive storage director unit. Indeed, the addition of the cache feature of the present invention may be made in such a manner as to be field-installable on previously shipped customer units at minimal additional complexity and cost, while substantial performance improvements may be realized.

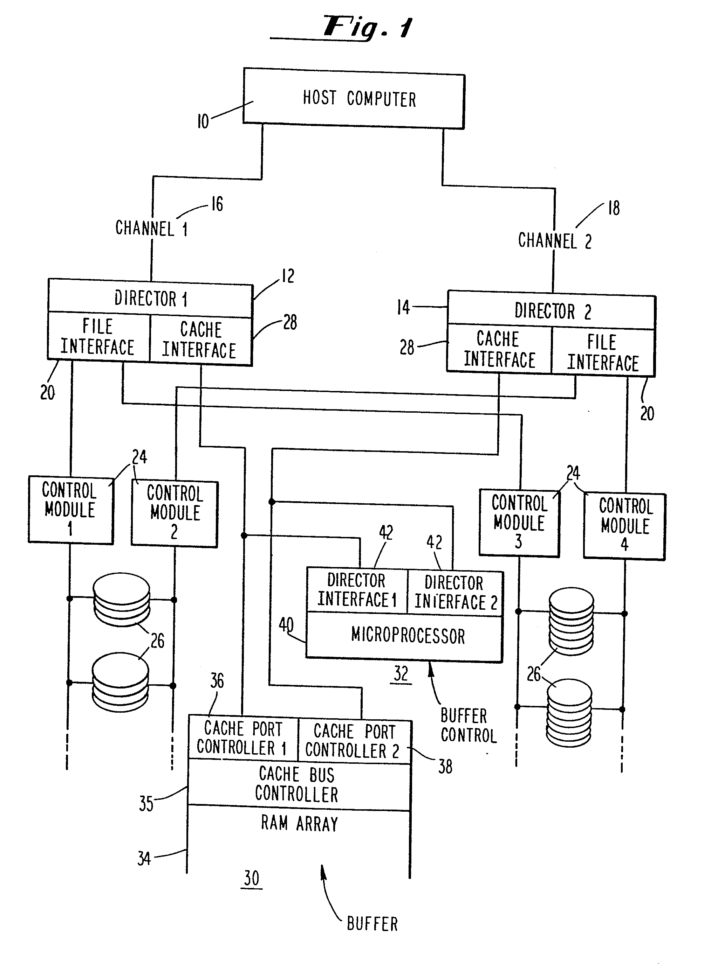

Referring now to Fig. 1, an overall view of a data processing system comprising a host computer system as defined above and a cache buffered memory subsystem is shown. The host computer 10 is connected to pair of storage directors 12 and 14 through channels 16 and 18, respectively. The directors and channels can be multiplied further, as well known in the art. Each director comprises a file interface 20 through which data is passed, via control modules indicated generally at 24, and thence to disk drive units indicated generally at 26. As indicated schematically in the drawing, the disk drives 26 may be of various types. The control modules 24 to which the disk drives 26 are connected serve to interface varying types of disk drives with directors 12 and 14 such that plural types of disk drives 26 together with appropriate control modules 24 can be used in conjunction with identical (though in some cases "personalized" by software) directors. As described thus far, the system of Fig. 1 is conventional. According to the present invention, the directors 12 and 14 are modified to additionally comprise cache interface units 28 which serve to interface the directors with a cache buffer memory subsystem according to the invention, which as schematically shown comprises a buffer unit 30 and a buffer control unit 32. The buffer unit 30 has as its chief function the storage of data having been "staged" in anticipation of being required by the host computer. When the staged data is called for it can be very quickly read out of a solid-state random access memory (RAM) array 34, the heart of the buffer unit, through one of a plurality of cache port controllers 36 and 38, respectively communicating with the directors 12 and 14, and thence to the host. This is generally a considerably faster process than reading the data directly from a disk drive unit 26 as there is no seek and latency time involved in the use of the random access memory 34, as there is in the case of the disk memories 26.

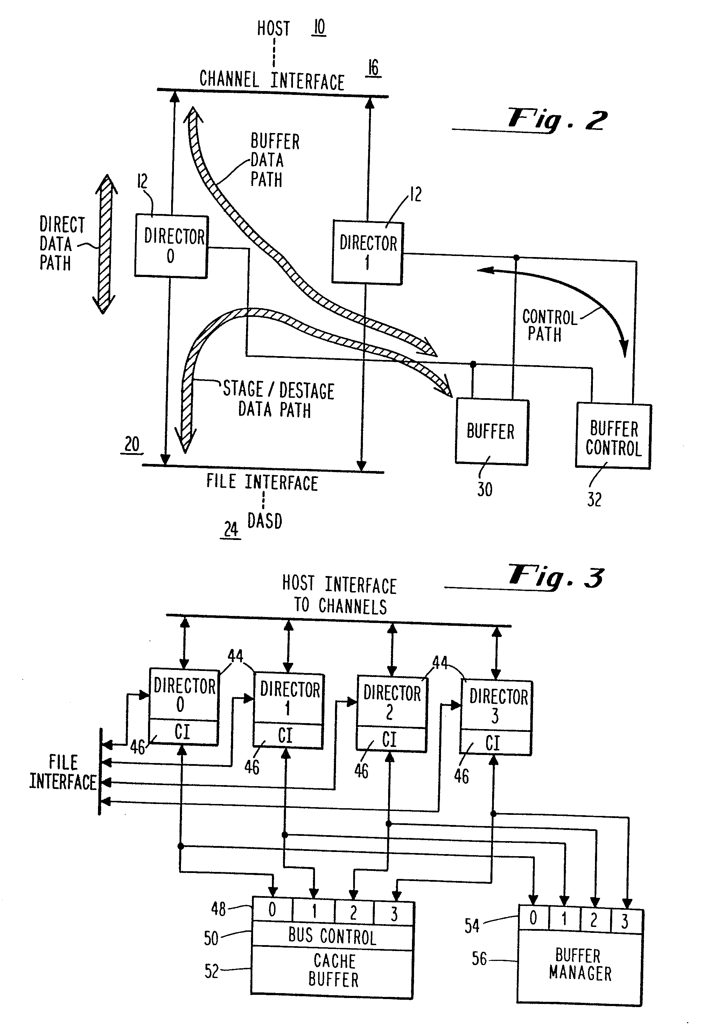

Referring now to Fig. 2 a schematic view is shown of the data flow between the file interface and the host interface in the cache buffered memory subsystem according to the invention. The typical prior art data path, directly from the channel interface 16 through a director 12, and via a file interface 20 to a disk drive 26, sometimes termed "DASD" for "direct access storage device", is shown. This data path is preserved according to the invention and is used as will be discussed below for all read operations when there is an error in the cache buffer, for the first of a detected sequence of read operations, and during ordinary write operations. In a staged read operation according to the invention, however, data is read from DASD 26, passes from the file interface 20 through the director 12 and thence to the data buffer 30 as directed by the buffer control unit 32. When the host 10 then calls for the data actually to be supplied to it, the location of the data is determined by buffer control unit 32, and this location is passed to the director 12, which controls the data flow out of the buffer 30 through the director 12 and through the channel interface 16 to the host 10. It will be appreciated that parallel connection is provided between the two directors, the channels, the buffer and the file interface unit. That is to say data may pass from a first director 12 from the buffer 30 enroute to the channel interface 16 after having been passed from DASD 26 to buffer 30 for staging by a second director 12. Paralleling of directors also permits data to move from the cache to the host even if the director used to stage data into the cache buffer then takes up another task before the data is actually called for by the host 10.

In this connection, it will be appreciated that the present IBM channel design provides a sequence of commands e.g., before an actual readout operation takes place. Typically, the host will issue a "Start I/O" command to the channel. The channel then will issue a series of commands, called seek and set sector, to the director which will then cause the disk drive's head moving apparatus to access the proper track of the disk and to look for a particular portion of that track. When this has been done a signal is passed back to the host indicating that the head is in position. A search command with search parameters is then issued by the host and the director then examines the count and key data fields for that containing the record of interest; when it is juxtaposed to the read/write head, the record is read via the director to the host's main memory for processing. According to the present invention, the same practice is followed upon receiving of a first read command. However, the data is further examined for indications that the successive record is likely also to be called for by the host. If so, the buffer controller 32 then causes the director to have the succeeding record or records brought into the cache buffer 30 so that subsequent read commands for successive records can more quickly be complied with. As noted above, the determination of which records show signs of being the first of a sequence of records to be called for by the host is the subject of our copending application (2).

The broad concept of that disclosure will be discussed below. In a particularly preferred embodiment, data is staged from the disk into the buffer an entire track or multiples of a track at a time. Such disk tracks typically may comprise up to about 100 records, i.e., blocks of data separated from one another by gaps and identified by index marks and the like. The 100 records may in turn be part of a disk file which may occupy many tracks, or in the case of large data files, up to several complete disk units.

As noted above, it is desirable that the cache buffered memory subsystem be a field installable modification to a preexisting product thus adding minor additional cost and complexity to a memory subsystem while permitting substantial performance advantages.

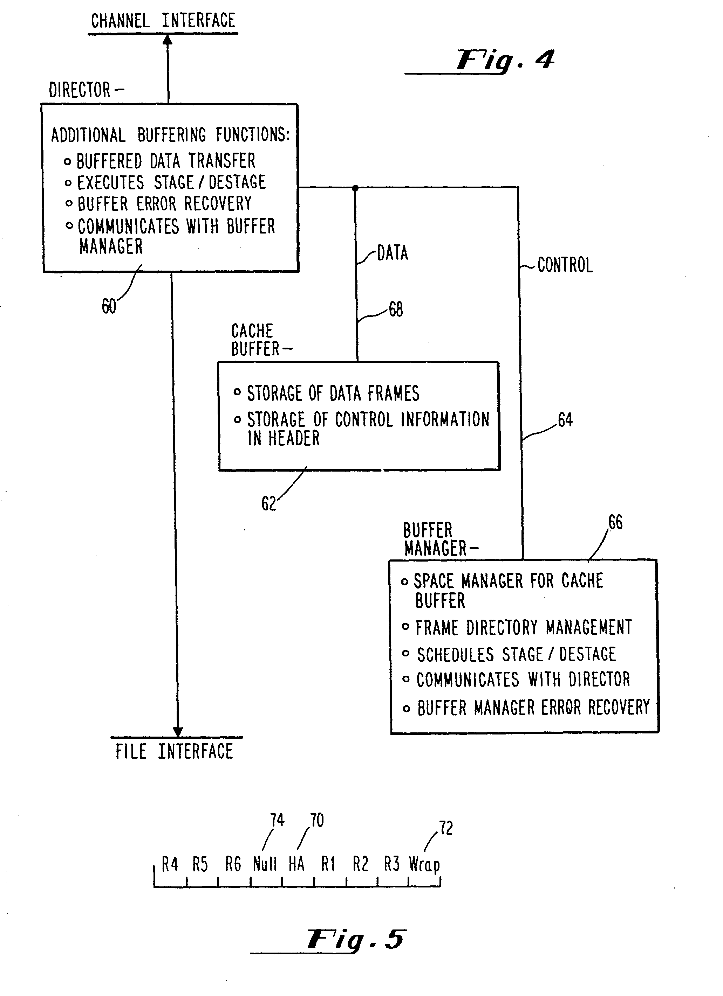

Fig. 3 shows one way in which the cache buffer can be added to a pre-existing product while satisfying these conditions. Fig. 3 shows four directors 44 each connected to a host interface via a channel. As in the prior art the directors 44 are each connected to the control modules by way of the file interface which use the director commands to convert the data stream to one suitable for writing onto a particular type of disk and vice versa. Thus, the control modules have hardware individual to the types of disk storage media to which they are to be connected, while the directors are adapted to the disk types by microcode, whereas their hardware is the same, regardless of the type of disks used. Such directors and control modules may be as found at present in our commercial products, for example in the Storage Technology Corporation Model 8880 disk controller. According to the present invention, to each director 44 is added a cache interface unit 46 which is connected to an interface 48 and a bus control unit 50 of the cache buffer unit 52. Control lines are also connected to the cache interface lines which run to the buffer interfaces 54 of the manager or control unit 56. Thus, to the pre-existing STC 8880 unit one need only add cache interface cards to the directors, and install the cache buffer and buffer manager units. Such an installation can be made to preexisting units in the field within a reasonable period of time and at reasonably modest additional cost.

It will be appreciated from inspection of Fig. 3 that the cache buffer 52 is connected in parallel to each of the directors 44 as is the buffer manager which controls flow of data between the directors and the cache buffer. This is in distinction to the Model 3770 cache arrangement proposed by Memorex Corporation discussed above in which a single cache per control module is interposed between the control module and the director. This arrangement has several disadvantages; one of the prime disadvantages is that more caches are required. While for a given performance level such single control module caches can be made somewhat smaller, they are then less likely to be fully utilized. Moreover, when configured in the dual-port fashion of Fig. 1, provision of a separate cache for each control module does not allow two or more directors to access data having been staged in a given cache. This alternative path access is very desirable in a highly active system to avoid path busy conditions as previously discussed. Such versatility is made possible by the arrangement of the invention as illustrated in Fig. 3.

Fig. 4 shows the functional partition of the cache buffered memory subsystem of the invention; that is, Fig. 4 illustrates the division of data management tasks between the various components making up the system of the invention.

As discussed above, in a preferred embodiment of the invention, it is configured as an add-on subsystem to a previously existing product, namely our model 8880 disk controller.

In this embodiment, the director 60 performs the functions of the director in the Model 8880; that is, it directs and interfaces to the control module which demultiplex the data to serial form thus directly interfacing the drives themselves, to the host channels thus converting the data from the form in which it is stored on disk to one to which the channel can respond. The director according to the invention performs the additional buffering functions of buffered data transfer, and execution of the stage and destage operations, i.e., writing of data from the disk via the control module into the cache buffer 62. The director also provides buffer error recovery systems, which amount to bypassing of the buffer in favour of direct transfer of data from the disk to channel interface, and the director communicates with the buffer manager. That is to say, the director performs switching functions, controlling the flow of data between the file interface to which is connected the control module and thence the disk units, the cache buffer 62, and the channel interface to which is connected the host computer. These switching functions are controlled in accordance with instructions received over a control interface 64 from the buffer manager 66. Thus, in the preferred embodiment in which the memory subsystem of the invention is added onto a preexisting STC 8880 product, the buffer manager control interface 64, the cache buffer 62, and the data interface 68 are added, while the director is controlled to switch the data path in accordance with the instructions of the buffer manager 56.

As noted above, the buffer manager 56 determines whether a particular data record or series of records is likely to be called for by the host and accordingly decides whether or not to "stage" it into the buffer 62 in advance of its actually being called for by the host in order to save access time. The specific decision-making process performed by the buffer manager 66 in making this determination is the subject of our copending application (2).

Broadly, the decision involves examining the actual data to look for track jump orders, end-of-file indicators, write indicators and the like, events unlikely to be encountered as parts of sequential data sets.

Fig. 4 also shows the cache buffer 62 itself which performs the function of storing the data, which is preferably organized by frames. In a preferred embodiment, the cache is subdivided into "domains" of a fixed size chosen such that the individual frames which correspond to logical tracks on disk fit as closely to integrally as possible within the domains.

This cache space organization scheme is the subject of a copending European Patent application, as already mentioned above.    The cache buffer 62 also stores the control information or header which defines each individual variable length logical frame by count, key and data fields as noted above.

The buffer manager 66 in the preferred embodiment would comprise a microprocessor

and performs the management functions as follows.  The chief function of the buffer manager is to manage the space of the cache, that is, to direct the storage of data within the cache memory and to retain the locations at which the specific records are stored in a "frame directory".  The buffer manager similarly schedules stage and destage operations and communicates its instructions to the director 60.  The buffer manager also performs error management and recovery functions, which may include controlling a mode switch to effect transferring of data directly between the disk and the channel interface in the case of a catastrophic error , in addition to parity-based error correction systems, as disclosed for example in our U.S. Patent 4,277,844.

After a first record has been determined to be part of sequence of records, the remainder of the disk track is then desirably cached. This presents problems in address control and in correlation of the cached data with the data received or written on disk. In particular, inasmuch as the host's subsequent commands will be in terms of disk sector addresses, not cache storage locations, accurate and fool-proof means must be provided to ensure that the proper correlation is maintained. Moreover, it is also necessary to provide means for determining when the full track has been staged into the cache so that the staging operation can be terminated at precisely the correct time.

It would be a simple matter, of course, to begin staging at the index mark which is recorded at one location on each disk track and continue until the index mark was once again encountered. However, ordinarily the first record on the track would be that which is first accessed by the host, and hence most of the track will not have been read to the host at the time at which the determination to stage the remainder of the track is made. Therefore, the time taken for the disk to rotate the remainder of a revolution would be consumed while waiting for the index mark once again to be juxtaposed to the read /write head. This waste of time is clearly undesirable.

Additional constraints are posed by the requirement that varying sizes of disk tracks be supported by the cache memory according to the invention. This prevents one from simply dividing the cache memory into subportions or "frames" of sizes equal to a particular disk track size and then simply assigning the starting addresses of each of the frames to the contents of the disk track as they are staged. In the preferred embodiment, the cache memory is instead divided into domains which themselves are substantially integral numbers of frames of varying sizes to accomodate varying disk track sizes. The domains themselves can be reallocated to other types of frames when desired. This is the subject of copending application (3).

Accordingly, when it is desired to stage a track to a cache, a frame of the appropriate size is selected from the list of available frames of that size and beginning and ending addresses in the cache memory are then made available. Data is then read from the disk to the cache beginning at the starting address. The current sector number is read from the disk device, in general using the information coded on a permanently encoded dedicated disk surface used to provide such sector designating information (as well as servo information used to control the rotational speed of the disk) all in accordance with the prior art. The current sector number is converted and stored in a register denominated emulated track position (ETP). The ETP is thus a measure of the number of bytes from the index mark at which reading was begun. This ETP value is the "target" ETP. An additional register in the preferred embodiment is used to contain header information taken from the header which begins each record stored on the disk, including error correction coding, synchronization, address mark and gap bytes. The next record's count field, i.e., that portion of the header defining the physical attributes of the following record, are saved in a second register. The record number from the second register byte is saved in a preferred embodiment in the storage director as the "target" record number. The records on the track between the starting position and the index mark are read. When the index mark is reached, a "current ETP" register is set to zero. One can then read the remainder of the records on the track after the index mark. As each field is read, the current ETP value is incremented to reflect the number of bytes which have passed. After each count field, the current ETP value is compared with the target ETP to see if it is greater than or equal to the target ETP. If it is, the record number from the current count field byte is compared to the "target" record number stored in the storage director for equivalency. If they are not equal, one continues to read data. If they are equal, the entire track has been read and reading can stop.

In the event of an error indication generated by the cache manager, it is important that "orientation" or data path establishment be redirected from the cache to the disk device so that the cache can be "cut out" of the data path, thus returning the path to that which would have existed if the cache had never been added to the long-term memory storage system. This must be done as discussed above in such as way that the addtion of the cache requires no modifications to the host, i.e., that it be plug compatible and software transparent thereto. Accordingly, when the system of the invention detects an error in the cache system is it inappropriate to terminate the host's request with the indication that the operation cannot be completed. In fact, the operation can be completed on the disk device to which the host's request was ostensibly addresed, thus fulfilling the goal of software transparency mentioned above. The problem with switching the operation to the disk drive is one of ensuring that the operation begins at the correct starting address on disk. Superficially, it would appear that it would be sufficient to compare the record identifier of the disk record supplied by the host against the identifier from the operation in the cache. However, there is no guarantee that all the record identifiers on the track are unique. A data integrity probelm could thus be presented. This is overcome according to the present invention by using both the record identifier, which is an integral part of each record and the sector number associated with the starting point of the record on a track. Both variables are available at the time the cache is being used to satisfy the host's request. Typically, the first step of locating the correct record starting position on disk is to use the record identifier variable. In turn, the record identifier of each record is compared against that saved from operation in the cache. When a match occurs, the sector number of the record is compared against the sector number saved from the cache operation. When a match occurs, it is thereby guaranteed that the correct record has been located, as the sector numbers are unique, even though the record numbers can, in some cases, be duplicated in two or more sectors. Correct identification by use of the present invention is assured because, according to the disk drive protocol within which the cache memory system of the invention is designed to operate, records are defined to have a length of at least one sector. One might simply look for correspondence between the sector identifier found on the disk and that stored in the cache director, and thereafter locate the correct record with the sector, but it is simpler to examine the record identifier stored within the data stored on the disk and confirm a match by sector number comparison. Moreover, in a preferred embodiment, hardware for examining the data on the disk for such identifying marks as these is a part of the storage director; see the copending application (2), in which the data is examined by the cache manager to determine whether a particular record appears likely to be one of a sequence of records.

In order to use the "wraparound" method of writing data from disk to cache, whereby the operation can begin wherever convenient, rather than waiting for the index mark to be juxtaposed to the read/write head, the header information preceding each track size frame in the cache must comprise means to indicate the relative locations of the records within the frames, so that for example when the host later calls for "record 3", there is a directory of cache addresses showing where this record is stored in the cache frame. For example, suppose that there are six records on a given track on a disk drive. The host calls for the first record. It is read directly from the disk to the host. Examination of the data in the record by the buffer manager reveals that the subsequent records are likely to be called for as well. This determination consumes some rotational time, so that records 3 to 6 beginning with record 3 are read into the cache beginning at a stated beginning address. When the index mark is reached, the cache manager initializes the present emulated track position (ETP address) and proceeds to read the remainder of the track into the cache, ending dwith record 2. The host will thereafter presumbaly call for records 2, 3, 4, 5 and 6, though not necessarily at once. In this connection note that the cache memory system design is again governed by the requirement of software-transparency. Here this means that the memory subsystem cannot be designed to respond to a request for the "next" record, it must be capable of responding as if to unrelated commands. Accordingly, later the host may call for, e.g., record 5. The cache director then consults its directory, locates the frame and examines the header, as defined below, so as to be able to index a pointer directly to the beginning of record 5, i.e. without reading through record 2 to 4, which is important if the cache is to operate efficiently.

Fig. 5 shows how the header which appears at the beginning of each frame can be organized to provide this capability. Stated slightly differently, because of the nature of the stage procedure, the records are not written into the cache frame assigned starting with a home address (HA) field. Instead the stage operation begins with the first available count field in order to minimize the time spent staging. Since the frame header is built as the records are being staged, the header entries will also start with the first available count field instead of the HA entry. To enable searching the header from the logical beginning to the logical end (as opposed to physical beginning to end), the following aids are introduced. Referring now to Fig. 5, there is an HAP (home address pointer) saved in a known location in the frame header. This one byte pointer tells which entry in the header is the home address (HA) 70. This is used by the microcode to locate the logical beginning of the track. This HA pointer is written into the frame when the header is written. A wrap or end of frame entry is shown at 72. The wrap entry has a unique value in order to ensure that it is not mistaken for an ordinary record entry. This entry informs the microcode to wrap to the beginning of the header to find the remainder of the record entries, i.e., this entry locates the end of the last record in the frame. A null entry is indicated at 74. This is a four byte entry embedded in the header that has the hexadecimal values "00000000". This entry, like the wrap entry, is guaranteed to be unique. The purpose of this entry simply is to signal that the end of the track has been reached. Thus, the header of Fig. 5, wherein records R4, R5 and R6 appear before the null and home address entry 74 and 70, and records 1, 2 and 3 are placed between the home address 70 and the wrap entry 72, indicates that staging of this particular frame began with the fourth record on the track of the disk. Record six was the last record on the track after which the null entry was written. Staging continued after staging of the home address pointer, and concluded with records 1, 2, and 3, after which the wrap entry, indicating the last record written to the physical cache frame was written.

It will be appreciated by those skilled in the art that this header format has a distinct advantage that only as many header entries need to be processed as actual records exist on disk in contradistinction to the method of, e.g., providing a header entry for each sector.

It will be appreciated that there has been described a method of control of the cache buffer memory which satisfies the needs of the art and objects of the invention listed above. By keeping the emulated track position information current as data is read from disk into cache, one has available at all times an accurate correlation between disk and present cache address if for some reason it is desired to switch channel orientation back to the disk from the cache. Furthermore, correct maintenance of the ETP register allows one to know accurately when the entire disk track has been read. This in turn permits one to write data from disk to cache as desirably without waiting for the index mark to be juxtaposed to the read/write head. Finally, provision of a frame header generated only when the data is written to the cache permits the header to be of a length proportional to the number of records in the cache, i.e., only those records actually written to the cache are marked off in the frame header.

CLAIMS

1. A cache memory system for use with magnetic disk data storage media (26), a solid-state memory array (30) and controller means (12,32) adapted to maintain information whereby correspondence between data locations on the disk storage media and storage addresses of data records stored in the solid-state array can be maintained, characterised in that the correspondence is established by comparison of an emulated track position, corresponding to the point on a given disk track at which a given data record stored in said cache memory means begins, with the starting address of said record in said cache memory.

2. A system according to claim 1, characterised in that the emulated track position value is stored in a first register at the beginning of writing of data from a disk track into the memory and, when an index mark is detected on the disk track, a second register is initialized to zero and is thereafter incremented upon reading of each byte from the disk track to the memory, whereby the contents of the second register may be compared to said emulated track position, the values being the same when an entire track has been read.

3. A method of control of a cache memory system adapted to store information received from magnetic disk memory media in quantities equal to the capacity of one disk track, characterised in that the data is read sequentially starting at any position on a given disk track, an emulated track position corresponding to the relative position on the disk at which the data begins to be read into the cache memory is stored in a first register, a second register is set to zero upon detection of an index mark on the disk during reading of data from the disk into the cache memory, the second register is increment upon reading of successive bytes of data, and the contents of the second register are compared with the emulated track position stored in the first register and, when the contents equal the stored emulated track position, an indication is provided that an entire disk track has been read into the cache memory.

4. A method according to claim 3, further characterised by the step of writing into a third register header information from the first record read in a given read operation from disk into the cache memory, comparing the contents of the third register with header information stored on the disk as part of records written to the cache memory, and terminating the read operation when correspondence is found.

5. In a method of staging data stored on disk memory media in logical tracks made up of plural records into a solid state cache memory, characterised by writing identifying header information into the cache memory during the staging, so that the length of the header is proportional to the number of the records comprised in a given disk track.

6. A method according to claim 5, wherein the header additionally comprises bytes indicative of the point at which an index mark on the disk is detected during the staging of data to the cache memory.

## _Fig. 1_

HOST COMPUTER

10

16 — CHANNEL 1

18 — CHANNEL 2

DIRECTOR 1 — 12

FILE INTERFACE | CACHE INTERFACE — 28

14 — DIRECTOR 2

28 — CACHE INTERFACE | FILE INTERFACE

20

20

CONTROL MODULE 1 — 24

CONTROL MODULE 2

CONTROL MODULE 3 — 24

CONTROL MODULE 4

26

26

DIRECTOR INTERFACE 1 — 42

DIRECTOR INTERFACE 2 — 42

40 — MICROPROCESSOR

32

BUFFER CONTROL

36 — CACHE PORT CONTROLLER 1 | CACHE PORT CONTROLLER 2

38

35 — CACHE BUS CONTROLLER

34 — RAM ARRAY

30

BUFFER

HOST 10

CHANNEL INTERFACE 16

_Fig. 2_

DIRECT DATA PATH

BUFFER DATA PATH

12
DIRECTOR 0

12
DIRECTOR 1

CONTROL PATH

STAGE / DESTAGE DATA PATH

20

FILE INTERFACE

24 DASD

BUFFER 30

BUFFER CONTROL 32

_Fig. 3_

HOST INTERFACE TO CHANNELS

44
DIRECTOR 0
CI

DIRECTOR 1
CI

44
DIRECTOR 2
CI

DIRECTOR 3
CI

FILE INTERFACE

46    46    46    46

48
| 0 | 1 | 2 | 3 |

50 BUS CONTROL

52 CACHE BUFFER

54
| 0 | 1 | 2 | 3 |

56 BUFFER MANAGER

CHANNEL INTERFACE

_Fig. 4_

DIRECTOR —

ADDITIONAL BUFFERING FUNCTIONS:
- ○ BUFFERED DATA TRANSFER
- ○ EXECUTES STAGE / DESTAGE
- ○ BUFFER ERROR RECOVERY
- ○ COMMUNICATES WITH BUFFER MANAGER

60

DATA

68

CONTROL

CACHE BUFFER —

- ○ STORAGE OF DATA FRAMES
- ○ STORAGE OF CONTROL INFORMATION IN HEADER

64

62

BUFFER MANAGER —

66

- ○ SPACE MANAGER FOR CACHE BUFFER
- ○ FRAME DIRECTORY MANAGEMENT
- ○ SCHEDULES STAGE / DESTAGE
- ○ COMMUNICATES WITH DIRECTOR
- ○ BUFFER MANAGER ERROR RECOVERY

FILE INTERFACE

74  70                    72

| R4 | R5 | R6 | Null | HA | R1 | R2 | R3 | Wrap |

_Fig. 5_